# EUROPEAN PATENT SPECIFICATION

(11) **EP 0 988 772 B1**
(45) Date of publication and mention of the grant of the patent: **28.11.2001**
(21) Application number: 98910885.7
(22) Date of filing: 19.03.1998
(51) Int. Cl.: H04R 1/34, G06F 1/16

(54) **PERSONAL COMPUTING DEVICES COMPRISING A RESONANT PANEL LOUDSPEAKER**
PERSONAL COMPUTER GERÄTE MIT PLATTENFÖRMIGEM RESONANTEN LAUTSPRECHER
ORDINATEURS INDIVIDUELS COMPRENANT UN HAUT-PARLEUR RESONANT EN FORME DE PANNEAU

(30) Priority: 22.03.1997 GB 9705981
(43) Date of publication of application: 29.03.2000
(73) Proprietor: New Transducers Limited, London SW3 3QH (GB)
(72) Inventor: AZIMA, Henry, Cambridge CB2 2TT (GB); COLLOMS, Martin, London NW2 2DA (GB); CROCKER, Norman, Hertfordshire AL5 2RG (GB); ROBERTS, Martin, Suffolk IP3 2QJ (GB)
(74) Representative: Maguire, Peter Albert
(86) International application number: GB9800834
(87) International publication number: WO9843464

(56) References cited:
- EP-A- 0 700 210
- WO-A-96/20576
- WO-A-97/09854
- GB-A- 2 310 559
- PATENT ABSTRACTS OF JAPAN vol. 011, no. 117 (E-498), 11 April 1987 & JP 61 264897 A (MITSUBISHI ELECTRIC CORP), 22 November 1986,

## Description

### TECHNICAL FIELD

The invention relates to personal computing devices and more particularly to lap-top and the like portable personal computers, e.g. so-called note-book computers and portable personal telephones incorporating loudspeakers.

### BACKGROUND ART

Embodiments of the present invention use members of nature, structure and configuration achievable generally and/or specifically by implementing teachings of our International application WO97/09842. Such members thus have capability to sustain and propagate input vibrational energy by bending waves in operative area(s) extending transversely of thickness often but not necessarily to edges of the member(s); are configured with or without anisotropy of bending stiffness to have resonant mode vibration components distributed over said area(s) beneficially for acoustic coupling with ambient air; and have predetermined preferential locations or sites within said area for exciter means, particularly operationally active or moving part(s) thereof effective in relation to acoustic vibrational activity in said area(s) and signals, usually electrical, corresponding to acoustic content of such vibrational activity.

Members as above are herein called distributed mode acouscic radiators and are intended to be characterised as in the above PCT application and/or otherwise as specifically provided herein.

WO 97/09854 describes a laptop computer having an opposed pair of distributed mode loudspeakers attached to either side of the display screen.

EP 700 210 describes a television set with acoustic waveguides to channel the output of conventional left and right loudspeakers to the front of the television set.

WO 96/20574 describes a sound reproducing apparatus having an acoustic horn in the side of the apparatus.

This invention is particularly concerned with acoustic devices in the form of loudspeakers for personal computing devices, and with personal computing devices incorporating such loudspeakers.

### DISCLOSURE OF INVENTION

According to the invention, there is provided a personal computing device having a body comprising a keyboard and a lid comprising a display screen hinged to the body to cover the keyboard, and a resonant panel loudspeaker in or attached to the lid, characterised by an acoustic waveguide or horn to direct acoustic output from the loudspeaker, wherein the waveguide or horn comprises a member mounted on the lid, the member being movable on the lid from a closed or retracted position to an advanced or open position.

The acoustic waveguide or horn may direct an acoustic output from the loudspeaker in a desired direction. The desired direction will normally be towards the user of the portable computing device.

An opposed pair of the waveguides or horns may be provided, e.g. to provide multi-channel acoustic output. The waveguide(s) or horn(s) may comprise a plate-like member hinged to the lid.

The lid may be provided with one or more acoustically transparent apertures in its outer surface.

### BRIEF DESCRIPTION OF DRAWINGS

The invention is diagrammatically illustrated, by way of example, in the accompanying drawings, in which:-
Figure 1 is a front perspective view of a first embodiment of lap-top computer according to the present invention;
Figure 2 is a cross-sectional view of the lid of the laptop computer;
Figures 2a and 2b are respective enlarged scrap cross-sectional side views of alternative details in the embodiment of Figures 1 and 2;
Figure 3 is a front perspective view of a second embodiment of laptop computer;
Figure 3a is a plan view of the lid of the laptop computer of Figure 3;
Figure 4 is a front perspective view of a third embodiment of laptop computer;
Figure 5 is a front perspective view of a comparative example of an electronic personal organiser;
Figure 5a is an enlarged scrap cross-sectional side views of alternative details of the comparative example of Figure 5, and
Figure 5b is an enlarged cross-sectional side view of an embodiment of the invention.
Figure 6 is a rear perspective view of the comparative example of Figures 5 and 5A and the embodiment shown in Figure 5b.

### BEST MODES FOR CARRYING OUT THE INVENTION

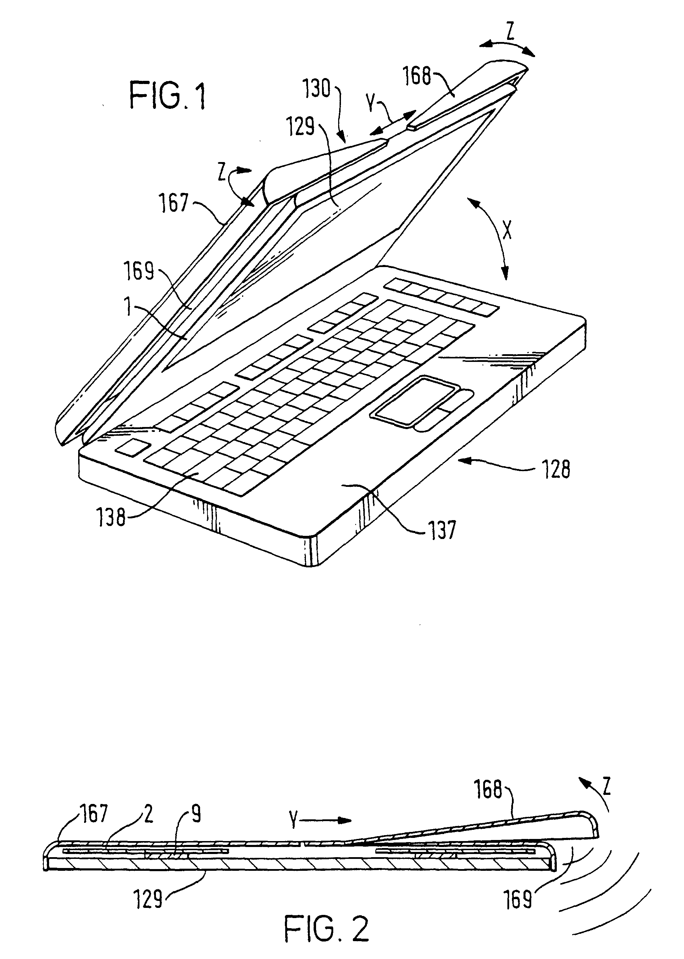

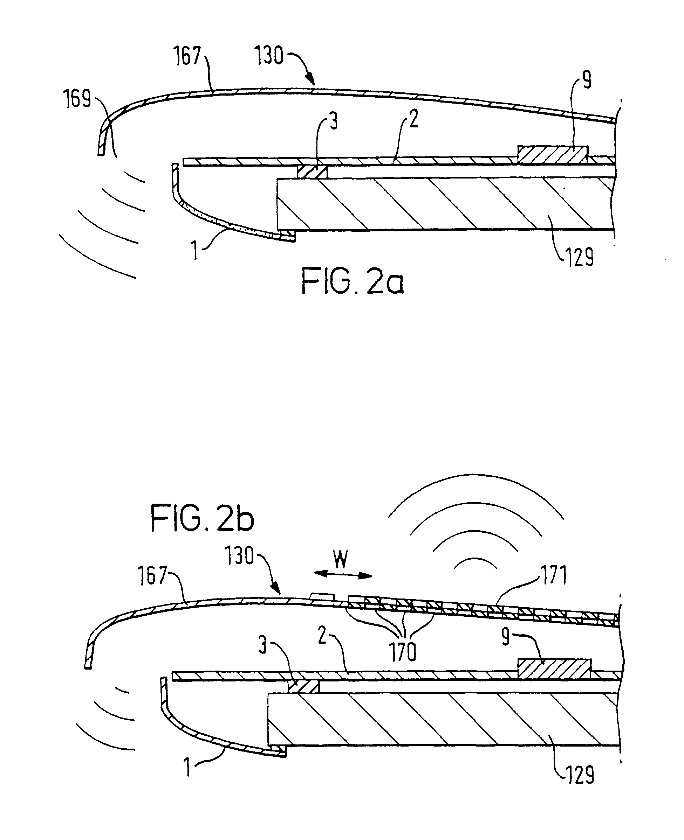

Figures 1, 2 and 2a illustrate a lap-top personal computer (128) having a body (137) comprising a keyboard (138) and a lid (130) having a rectangular frame (1), e.g. of moulded plastics, supporting a visual display screen (129) and which lid is hinged to the body for movement as indicated by arrow X, between a folded position in which the lid encloses the keyboard and an erect position in which the lid is substantially upright.

The lid (130) houses an opposed pair of loudspeakers to adapt the computer for multi-media applications and the like, the loudspeakers each comprising a thin rectangular panel (2) forming a multi-mode acoustic radiator of the kind described in WO97/09842. Each loudspeaker panel (2) has a monolithic structure and is supported near to its periphery on discrete resilient suspension elements (3) e.g. of an elastomeric material, which in turn are supported on the surrounding frame (1) via the display screen (129). A vibration exciter (9) is mounted on each panel at a predetermined position as discussed more fully in our International application WO97/09842, to launch bending waves into each of the panels (2) to cause them to resonate to produce acoustic outputs. The exciters may be electrodynamic.

The lid (130) comprises an opposed pair of cover members (167,168) which together define the outer casing of the lid and are each shaped as a flat rectangular panel having a downturned peripheral rim extending round three adjacent sides, the fourth side being arranged to abut against the corresponding side of the opposite cover member. The cover members slide and hinge on the frame (1) in the directions indicated by arrows Y and Z respectively such that when extended from the closed position indicated at the left-hand side in Figure 2 to their operative position indicated in Figure 1 and the right-hand side in Figure 2, they are locked by friction or other means to form acoustic waveguides or horn structures whose apertures (169) are presented to the opposite sides of the lid. The horn expansion effectively begins over the region of the loudspeakers. The diffuse sound energy and nearly constant power with frequency of the loudspeakers means that relatively good matching is achieved between the horn and the speaker elements. Benefits include relatively high acoustic efficiency, improved low range response and a sound directivity which is beneficially directed towards the user with reduced leakage towards others. The relatively small effective acoustic sources represented by the horn apertures (169) also will improve the sense of stereo image localisation for the user.

It might also be possible to incorporate the multi-mode speaker units in the lid cover members (167,168) where the radiation may then either be bi-directional and/or forwards directed via the horn structure.

As shown in Figure 2b it is possible to render the cover members (167,168) acoustically transparent by providing apertures (170) therein, the apertures being coverable by a sliding grille (17) to allow sound from the speaker to exit, or alternatively acoustically opaque when the grille is moved to cover the apertures, to direct the sound through and only through the horn element. The sliding grille would allow the user to open, or partially open and close the apertures to control the degree or mix of the horn effective component and the direct sound emitted via the grille.

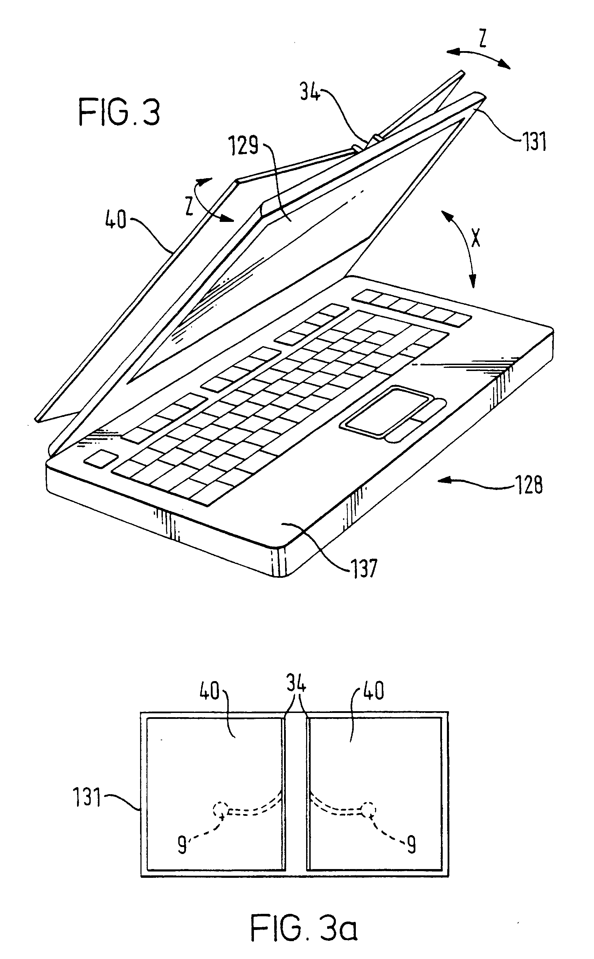

Figures 3 and 3a show a second embodiment of laptop computer which is generally similar to that described above with reference to Figures 1 and 2. However the complexity of the waveguide or horn mechanism is simplified, as compared to the embodiment of Figure 1 and 2 so that opposed horn/waveguide elements are provided by the wedge shapes formed between flat plate elements (40) hinged by hinges (34) to the outer surface of a generally conventional lid (131) and the lid itself. In this embodiment, the elements (40) are or comprise multi-mode acoustic radiators of the kind described in WO97/09842 and excited by vibration exciters (9) mounted thereon. The hinges (34) may have friction or detent action to allow both predetermined and/or user-preferred angles for the waveguide elements. Additionally the lid casing itself may be adapted to resonate according to distributed mode principles by control of effective area geometry and exciter position.

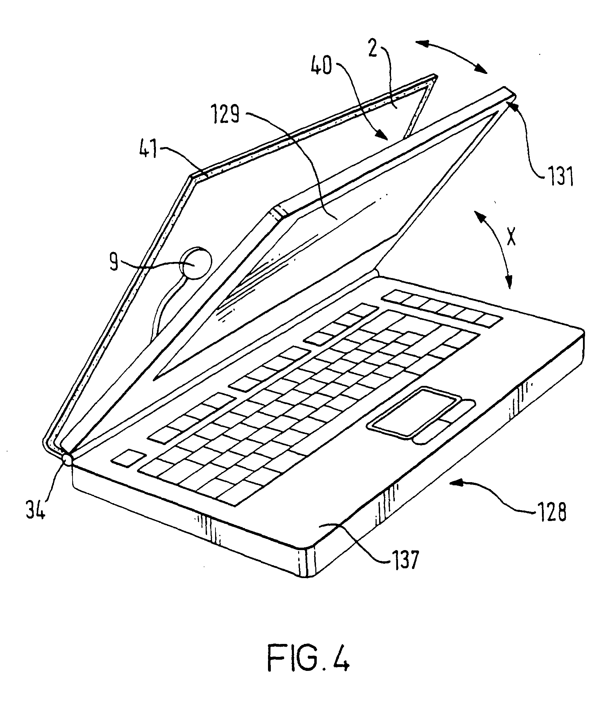

The embodiment of Figure 4 is generally similar to that of Figure 3, but in this case, the generally conventional lid case (131) of the laptop computer is provided with a single plate-like cover (40) hinged to the body (137), to form a wedge-shaped cavity to provide horn-like loading for a multi-mode speaker (2) located within the cover.

The plate-like cover (40) is formed with a rectangular frame (41) supporting a distributed mode acoustic radiator panel (2) which may be bi-directional or forwards directed according to the required acoustic efficiency and desired use. This plate-like cover may be single or multi-channel according to the properties of the plate and the location and number of exciters. Distributed mode speaker panels lend themselves to activation by multiple exciters due to the non-pistonic bending wave operation.

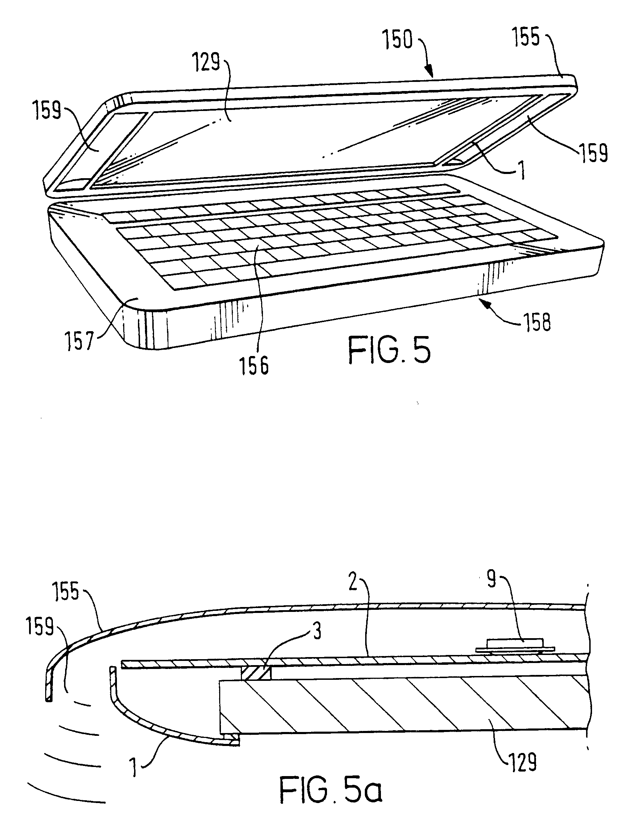

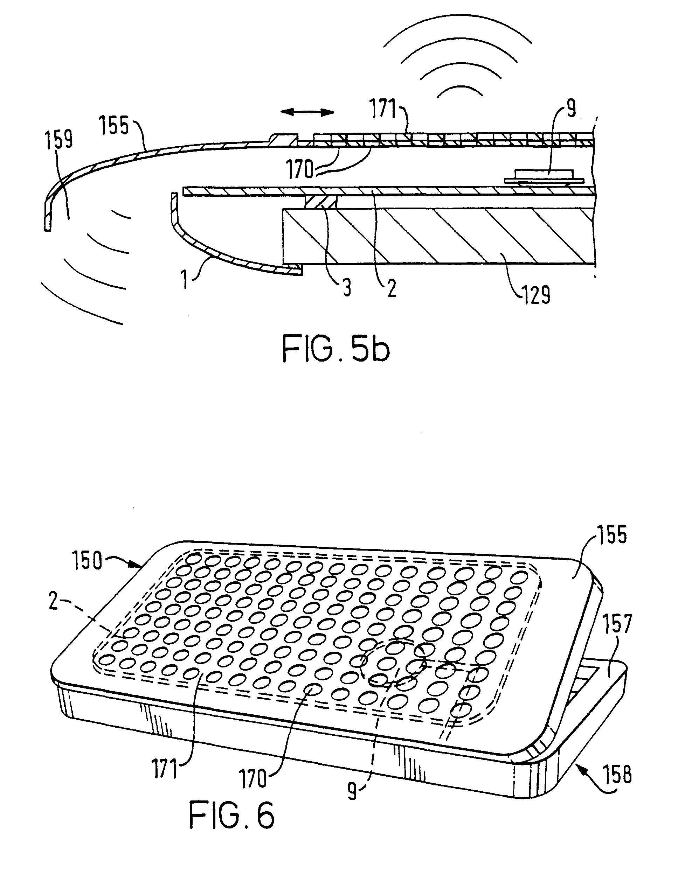

In the embodiment of Figures 5 and 6, the concept of the acoustic wave guide as described above is applied to distributed mode speaker(s) in the lid (150) of a personal digital assistant or personal data unit (158). The device (158) is generally similar to the laptop computer described above and comprises a body (157) having a keyboard (156) and a lid (150) hinged to the body and incorporating a visual display screen (129). The lid construction is similar to that described above with reference to Figures 2 and 2a or 2b, as indicated in Figures 5a and 5b, with the exception that in the present case the lid cover (155) is a fixed structure having a plate-like surface surrounded by a downturned peripheral lip and which carries a frame (1) supporting the display screen (129) with a resonant panel loudspeaker (2,9) resiliently mounted thereon. A pair of slots (159) are defined between opposite sides of the visual display screen (129) and the cover (155) which are coupled to an acoustic channel leading to the loudspeaker region and which directs sound towards the user. Optionally as shown in the embodiment of Figures 5b and 6, the lid casing may be perforated at (170) to allow sound to be radiated from the rear section, under the control of a movable grille (171). The diffuse radiation characteristic and bi-directional nature of the distributed mode speaker lends itself to the effectiveness of this application in the suggested mode of operation.

Where a personal data unit has audio modes of operation or may be combined with or associated with a mobile telephone, the relatively large distributed mode-type speaker installed in the lid provides a means for hands free communication and also will be effective for loudspeaking tele-conferencing.

The lid cover (155) may also be designed as an integrated distributed mode speaker or speakers if desired.

## Claims

1. A personal computing device (128) having a body (137) comprising a keyboard (138) and a lid (130,150) comprising a display screen (129) hinged to the body (137) to cover the keyboard (138), and a resonant panel loudspeaker (2,40) in or attached to the lid (130,150), **characterised by** an acoustic waveguide or horn to direct acoustic output from the loudspeaker (2), wherein the waveguide or horn comprises a member (167,168,40) mounted on the lid, the member (167,168,40) being movable on the lid (130,150) from a closed or retracted position to an advanced or open position.

2. A personal computing device according to claim 1, **characterised in that** the member (167,168,40) forms a lid cover.

3. A personal computing device according to claim 2, wherein the cover (40) is or comprises a resonant panel loudspeaker.

4. A personal computing device according to any preceding claim, **characterised in that** the loudspeaker panel (2) is supported in the lid (130,150) by means of a resilient suspension (3).

5. A personal computing device according to claim 4, **characterised by** a frame (1) surrounding the panel (2) and on which the panel is suspended.

6. A personal computing device according to claim 5, **characterised in that** the display screen (129) is supported on the frame (1) and **in that** the loudspeaker panel (2) is resiliently supported on the display screen (129).

7. A personal computing device according to any preceding claim, **characterised by** an opposed pair of the waveguides or horns.

8. A personal computing device according to any preceding claim, **characterised in that** the waveguide or horn comprises a plate-like member (40) hinged to the lid (130,150).

9. A personal computing device according to any preceding claim, **characterised in that** the lid (130,150) is provided with one or more acoustically transparent apertures (170).

10. A personal computing device according to claim 11, **characterised by** a movable grille (171) to adjust acoustic output through the apertures.

11. A personal computing device according to any preceding claim, **characterised in that** the resonant panel loudspeaker (2) is integral with the lid (130,150).

12. A personal computing device according to any preceding claim, **characterised in that** the resonant panel loudspeaker comprises a stiff lightweight panel (2) having a monolithic structure.

13. A personal computing device according to any preceding claim, **characterised in that** the resonant panel loudspeaker (2) is a distributed mode acoustic radiator.

## Patentansprüche

1. Personalcomputergerät (128), das einen Körper (137) mit einer Tastatur (138) und einen Deckel (130, 150) mit einem Anzeigeschirm (129), der an dem Körper (137) angelenkt ist, um die Tastatur (138) zu bedecken, und einen resonanten plattenförmigen Lautsprecher (2, 40) aufweist, der in dem Deckel (130, 150) oder an ihm angebracht ist, **gekennzeichnet durch** einen akustischen Wellenleiter oder Trichter, um eine akustische Ausgabe vom Lautsprecher (2) zu richten, worin der Wellenleiter oder Trichter ein Bauteil (167, 168, 40) aufweist, das am Deckel montiert ist, wobei das Bauteil (167, 168, 40) auf dem Deckel (130, 150) aus einer geschlossenen oder zurückgezogenen Stellung zu einer vorgeschobenen oder offenen Stellung bewegbar ist.

2. Personalcomputergerät nach Anspruch 1, **dadurch gekennzeichnet, daß** das Bauteil (167, 168, 40) eine Deckelabdeckung bildet.

3. Personalcomputergerät nach Anspruch 2, worin die Abdeckung (40) ein resonanter plattenförmiger Lautsprecher ist oder einen solchen aufweist.

4. Personalcomputergerät nach einem der vorhergehenden Ansprüche, **dadurch gekennzeichnet, daß** die Lautsprecherplatte (2) im Deckel (130, 150) mittels einer federnden Aufhängung (3) gehalten wird.

5. Personalcomputergerät nach Anspruch 4, **gekennzeichnet durch** einen Rahmen (1), der die Platte (2) umgibt und an welchem die Platte aufgehängt ist.

6. Personalcomputergerät nach Anspruch 5, **dadurch gekennzeichnet, daß** der Anzeigeschirm (129) auf dem Rahmen (1) gehalten wird, und dadurch, daß die Lautsprecherplatte (2) auf dem Anzeigeschirm (129) federnd gehalten wird.

7. Personalcomputergerät nach einem der vorhergehenden Ansprüche, **gekennzeichnet durch** ein gegenüberliegendes Paar der Wellenleiter oder Trichter.

8. Personalcomputergerät nach einem der vorhergehenden Ansprüche, **dadurch gekennzeichnet, daß** der Wellenleiter oder Trichter ein plattenartiges Bauteil (40) auf weist, das an dem Deckel (130, 150) angelenkt ist.

9. Personalcomputergerät nach einem der vorhergehenden Ansprüche, **dadurch gekennzeichnet, daß** der Deckel (130, 150) mit einer oder mehr akustisch durchlässigen Öffnungen (170) versehen ist.

10. Personalcomputergerät nach Anspruch 11, **gekennzeichnet durch** ein bewegbares Gitter (171), um eine akustische Ausgabe **durch** die Öffnungen einzustellen.

11. Personalcomputergerät nach einem der vorhergehenden Ansprüche, **dadurch gekennzeichnet, daß** der resonante plattenförmige Lautsprecher (2) mit dem Deckel (130, 150) einstückig ist.

12. Personalcomputergerät nach einem der vorhergehenden Ansprüche, **dadurch gekennzeichnet, daß** der resonante plattenförmige Lautsprecher eine steife leichte Platte (2) mit einer monolithischen Struktur aufweist.

13. Personalcomputergerät nach einem der vorhergehenden Ansprüche, **dadurch gekennzeichnet, daß** der resonante plattenförmige Lautsprecher (2) ein akustischer Strahler mit verteilten Moden ist.

## Revendications

1. Dispositif d'ordinateur personnel (128) ayant un corps (137) comprenant un clavier (138) et un couvercle (130, 150) comprenant un écran d'affichage (129) articulé sur le corps (137) pour couvrir le clavier (138), et un haut-parleur de panneau résonnant (2, 40) dans le couvercle ou fixé au couvercle (130, 150), **caractérisé par** un guide d'ondes acoustique ou pavillon pour diriger une sortie acoustique du haut-parleur (2), dans lequel le guide d'ondes ou pavillon comprenant un élément (167, 168, 40) monté sur le couvercle, l'élément (167, 168, 40) étant mobile sur le couvercle (130, 140) à partir d'une position fermée ou rétractée jusqu'à une position avancée ou ouverte.

2. Dispositif d'ordinateur personnel selon la revendication 1, **caractérisé en ce que** l'élément (167, 168, 40) forme un couvercle.

3. Dispositif d'ordinateur personnel selon la revendication 2, dans lequel le couvercle (40) est ou comprend un haut-parleur résonnant en forme de panneau.

4. Dispositif d'ordinateur personnel selon l'une quelconque des revendications précédentes, **caractérisé en ce que** le panneau de haut-parleur (2) est supporté dans le couvercle (130, 150) au moyen d'une suspension souple (3).

5. Dispositif d'ordinateur personnel selon la revendication 4, **caractérisé par** un cadre (1) entourant le panneau (2) et sur lequel le panneau est suspendu.

6. Dispositif d'ordinateur personnel selon la revendication 5, **caractérisé en ce que** l'écran d'affichage (129) est supporté sur le cadre (1) et **en ce que** le panneau de haut-parleur est supporté de façon souple sur l'écran d'affichage (129).

7. Dispositif d'ordinateur personnel selon l'une quelconque des revendications précédentes, **caractérisé par** une paire opposée de guides d'ondes ou de pavillons.

8. Dispositif d'ordinateur personnel selon l'une quelconque des revendications précédentes, **caractérisé en ce que** le guide d'ondes comprend un élément ressemblant à une plaque (40) articulé sur le couvercle (130, 150).

9. Dispositif d'ordinateur personnel selon l'une quelconque des revendications précédentes, **caractérisé en ce que** le couvercle (130, 150) est pourvu d'une ou de plusieurs ouvertures acoustiquement transparentes (170).

10. Dispositif d'ordinateur personnel selon la revendication 11, **caractérisé par** une grille mobile (171) pour ajuster la sortie acoustique via les ouvertures.

11. Dispositif d'ordinateur personnel selon l'une quelconque des revendications précédentes, **caractérisé en ce que** le haut-parleur résonnant en forme de panneau (2) est intégré au couvercle (130, 150).

12. Dispositif d'ordinateur personnel selon l'une quelconque des revendications précédentes, **caractérisé en ce que** le haut-parleur résonnant en forme de panneau comprend un panneau léger rigide (2) ayant une structure monolithique.

13. Dispositif d'ordinateur personnel selon l'une quelconque des revendications précédentes, **caractérisé en ce que** le haut-parleur résonnant en forme de panneau (2) est un diffuseur acoustique en mode distribué.
